# EUROPEAN PATENT SPECIFICATION

(11) **EP 4 093 570 B1**
(45) Date of publication and mention of the grant of the patent: **02.12.2026**
(21) Application number: 21704184.7
(22) Date of filing: 25.01.2021
(51) Int. Cl.: B23B 51/02

(54) **DRILL**
BOHRER
FORET

(30) Priority: 23.01.2020 NL 2024734; 23.01.2020 NL 2024733
(43) Date of publication of application: 30.11.2022
(73) Proprietor: Colt Technologies GmbH, 51789 Lindlar (DE)
(72) Inventor: MIEBACH, Jürgen, 51789 Lindlar (DE)
(74) Representative: Bobzien, Hans Christoph
(86) International application number: PCT/EP2021/051593
(87) International publication number: WO 2021/148672

(56) References cited:
- EP-A1- 2 123 381
- EP-A1- 2 774 704
- EP-A1- 2 857 131
- WO-A1-2018/058752
- JP-A- 2013 208 692
- US-B1- 6 309 149

## Description

### FIELD OF THE INVENTION

The invention relates to the field of drill heads.

### BACKGROUND OF THE INVENTION

High speed steel drills are optimized for drilling holes in steel.
CN107225273A discloses an anti-fracture high-speed steel straight shank twist drill. The anti-fracture high-speed steel straight shank twist drill includes a drilling rod, a drilling bit, a pressure sensor, a spiral rod, a compression head, a compression rod, a spring, a groove, an air pressure chamber, and a steel sleeve; one end of the drilling rod is connected to the drilling bit, and the other end of the drilling rod is connected to the spiral rod; a pressure sensor is arranged in the drilling rod; the air pressure chamber is arranged outside the drilling rod; a surface of the spiral rod is sleeved with the steel sleeve, and a groove is formed in an outer side of the spiral rod; the bottom of an inner wall of the groove is connected to the spring; the top of the spring is connected to the compression rod; and the top of the compression rod is connected to the compression head. While the twist drill is blocked, the pressure sensor detects a torsion force acted on the drilling bit, when the torsion force exceeds a limit value, the compression head is compressed by the air pressure chamber, the spring is compressed, the spiral rod can rotate under drive of a machine, and then the drilling bit can be prevented from being fractured due to super force; and the steel sleeve can protect the spiral rod from damage due to high speed friction, and the service life of the twist drill is prolonged.

A disadvantage of these type of drills is that they wear out rapidly especially when a longitudinal force forces the drill quickly into the steel.

JP2013208692A discloses a drill according to the preamble of claim 1.

### SUMMARY OF THE INVENTION

An object of the invention is to mitigate the disadvantages as mentioned above.

According to the invention, there is provided a drill for drilling in hard materials according to claim 1, comprising a drill head having a rotational axis, wherein the drill head comprises a centre point comprising: an apex aligned with the rotational axis; centre point cutting edges radially extending and receding from the apex, wherein a first one of the centre point cutting edges and a second one of the centre point cutting edges have a different radius and/or are receding at least for a part at a different rate.

A drill is typically used for drilling holes in an object or workpiece. The centre point of the drill is arranged to a particular or selected location of the object when starting to drill a hole in the object. The centre point is typically the vertex, the most protruding part or the most extended part of the drill and therefore typically contacts the object first at the particular or selected location. The centre point thereafter drills a centring hole in the object when the drill is pushed into the object. This centring hole typically has a small diameter compared to the diameter of the drill as a whole. The centre point after initiating the centring hole snugly fits in the centring hole.

After that the centre point initiated the centring hole and reaches a particular depth, the main cutting edges will come into contact with the object when the drill is pushed further into the object. The main cutting edges remove the main body of material for forming the hole. The diameter of the hole typically snugly fits around the drill; thus, the diameter of the drill is substantially equal to the diameter of the hole. The main cutting edges, during removing the main body of material, may experience side forces or centrifugal forces causing the drill to move, accelerate or jerk sideways. The centre point snugly fitting in the centring hole opposes these forces by pushing off against the centring hole having the technical effect that the drill as a whole is kept at the particular or selected location. This effect is particularly present during first contact of the main cutting edges.

The drill when drilling typically has a particular angular velocity. The rotational axis is the axis where around the drill rotates. The distance of a part of the drill from the rotational axis is defined as the radius for this part of the drill. The tangential velocity of a part of the drill depends on the radius of this part multiplied with the revolutions of the drill. Thus, the tangential velocity of a part of the drill linearly increases with increasing radius of the part. Or, the outer part of the drill is having the highest tangential velocity while the part of the drill aligning with the rotational axis is having the lowest tangential velocity.

It is an insight of the inventor that the centre point due to its low angular velocity causes friction, typically the majority of the friction of the drill head when drilling into the body of material. It is a further insight of the inventor that by introducing an additional movement not aligned with the direction of the tangential velocity to the centre point, specifically the apex, the friction of the centre point and thus drill head may be reduced.

The centre point according to the invention has the feature of centre point cutting edges radially extending and receding in an axial direction from the apex. These centre point cutting edges cut away the material for forming the centring hole. The centre point according to the invention has the further feature of a first one of the centre point cutting edges and a second one of the centre point cutting edges have a different radius. As the radius is different and the centre point cutting edges are receding in an axial direction from the apex, at a particular depth of the centring hole, one centre point cutting edge is still able to cut away material while the other centre point cutting edge is not able to cut away material as this centre point cutting edge has ended. This asymmetry causes instability. This instability causes an oscillation or movement, typically a small oscillation or movement, of the centre point, and thus the drill head. As this additional small oscillation or movement is not aligned and/or in sync with the tangential velocity, it has the effect of letting the apex move, such as in an oscillating or random pattern. As the apex is moving around, one of the centre point cutting edges comes into contact with the material that used to be in front of the apex and cuts this material away. The technical effect is that the introduced oscillation or movement reduces the friction of the centre point, more specifically the apex or the region around the apex, and thus reduces the friction of the drill head as a whole when drilling. This reduced friction allows the drill to drill a hole in an object with less force or pressure applied on the drill. Furthermore, a reduction of friction has also the technical effect of extending the lifetime of the drill head and thus the drill.

Alternatively, the centre point cutting edges are receding at least for a part at a different rate in an axial direction from the apex. As the rate of receding is different, at a particular depth of the centring hole, one centre point cutting edge receding less rapidly is still able to cut away material while another centre point cutting edge receding more rapidly is not able to cut away material as this material is already cut away by the other centre point cutting edge. This asymmetry causes instability. This instability causes an oscillation or movement, typically a small oscillation or movement, of the centre point, and thus the drill head. This oscillation or movement leads to the effect of an extended lifetime of the drill head and thus the drill as described above.

In an embodiment, the feature of a different radius is advantageously combined with the feature of receding at least for a part at a different rate. This has the effect of optimized control over the oscillation or movement as well as that the oscillation or movement may be generated by centre point cutting edges extending radially less far.

In an embodiment of the drill, the centre point cutting edges are angularly evenly distributed around the apex. If the centre point comprises two centre point cutting edges, the centre point cutting edges are arranged around the apex with a radial angle of pi. If the centre point comprises three centre point cutting edges, the centre point cutting edges are arranged around the apex with a radial angle of 2/3 pi radian. If the centre point comprises four centre point cutting edges, the centre point cutting edges are arranged around the apex with a radial angle of pi/2 radian. The angular distribution may be seen from a point on the rotational axis not being the apex, preferably from a point in front of the drill head on the rotational axis. The angularly evenly distributed centre point cutting edges have the technical effect of increasing the stability of the centre point, drill head and thus the drill, as the centre point cutting edges remove the same amount of material from the drill hole apart from the claimed advantageous asymmetry. The advantage is that the amplitude of the oscillation or movement of the apex is therefore balanced between reducing friction of the apex region and providing a stable drill.

In an embodiment of the drill, the centre point cutting edges deviate and/or curve away from a radial. The centre point cutting edges have a tangential velocity around the rotational axis. This tangential velocity is perpendicular to the direction in which the radial extends from the rotational axis. If the centre point cutting edges deviate and/or curve away from the radial, the tangential velocity is not perpendicular to the centre point cutting edge. This allows the centre point cutting edge to slice through the material instead of bluntly cutting. The centre point cutting edge slicing through the material has the technical effect of reducing the friction of the centre point cutting edge and thus the centre point and drill head as a whole.

In a preferred embodiment, the centre point cutting edges deviate and/or curve away in substantially the same manner. This introduces stability in the centre point. The advantage is that the amplitude of the oscillation or movement of the apex is therefore balanced between reducing friction of the apex region and providing a stable drill.

In an embodiment only one centre point cutting edge deviates and/or curves away from the radial. This introduces instability in the centre point, therefore preferably this asymmetry is therefore preferably introduced when the first part of the centre point is already well into material. Thus, the introduced instability in the centre point is preferably arranged at some distance from the apex or rotational axis.

In an embodiment of the drill, the centre point cutting edges are convex centre point cutting edges. The convex shape of the centre point cutting edges provide the centre point cutting edges when slicing through the material to be removed with a centripetal force stabilizing the drill head. Furthermore, the convex shape of the centre point cutting edges provide the material just cut away when slicing through the material to be removed with a centrifugal force such that the material is removed from the region where the centre point is in a similar fashion as described for the convex edge sections of the main cutting edges. This improved removal of material advantageously reduces friction of the centre point.

In an embodiment of the drill, the centre point cutting edges recede from the apex at the same rate. This receding at the same rate provides stability to the centre point. The amount of instability introduced by features of the centre point can be balanced by at least having a same rate of receding of the centre point cutting edges in this embodiment allowing the skilled person to balance the amount of oscillation or movement introduced by the rotating centre point when drilling.

In an embodiment of the drill, the part of the first one of the centre point cutting edges and the part of the second one of the centre point cutting edges having a different rate of receding are arranged distal from the apex. This advantageously allows the centre point to first cut an initial centre hole with a shallow depth enough to provide stability to the centre point, whereafter the asymmetric part of the centre point comes into contact with the object or material for introducing a controlled instability for reducing friction of the centre point. This has the technical effect of only introducing the controlled instability at a point in time when the centre point already provides some stability as it can push sideways onto the shallow initial centre hole.

According to the invention, the drill head comprises main cutting edges radially extending from the centre point. The centre point is typically providing stability to the drill head by making a centring hole before the main cutting edges cut into the material. This centre point typically comprises the apex of the drill head protruding the most into the material or object. As the main cutting edges typically cut away the larger part of the material to be removed from the hole, the main cutting edges will experience the largest forces in varying directions when cutting. These forces in varying directions cause instability. The centre point rotating in its centre hole provides stability to the drill head as it may push sideways against the centre hole walls to provide stability in a sideway direction.

The advantage of the main cutting edges radially extending from the centre point is that the main cutting edges substantially cut away material along the same line, such as at the same radial or any deviating and/or curved shape extending from the rotational axis, such that advantageously a discontinuation or step in the cutting edge in a substantially radial plane is prevented. A discontinuation or step in the cutting edge, comprising a main cutting edge and a centre point cutting edge, may cause instability, which is advantageously prevented.

According to the invention, the centre point comprises an asymmetric cutting edge arranged between a proximal end of one of the main cutting edges and a distal end of one of the centre point cutting edges; and a proximal end of another one of the main cutting edges ends at a distal end of another one of the centre point cutting edges. The asymmetric cutting edge advantageously allows to bridge the asymmetry introduced between the centre point cutting edges. The asymmetry can be either that the centre point cutting edges have different radius and/or recede at a different rate. This asymmetric cutting edge advantageously allows to have a continuous cutting edge extending from the apex or rotational axis to the circumference of the drill head.

In an embodiment of the drill, the asymmetric cutting edge is extending in a direction different from the direction of the distal end of the one of the centre point cutting edges. This advantageously may introduce the asymmetry into the centre point for obtaining the controlled instability, oscillation or movement of the apex in operation.

In an embodiment of the drill, the hard material is a metal. In an embodiment of the drill, the metal is a hard metal, such as steel. In an embodiment of the drill, the drill is a high-speed steel (HSS) drill. The shape of the drill, specifically the main cutting edges being substantially in a cutting plane perpendicular to the rotational axis, is advantageously well suited to cut into metals, such as hard materials. The shape of the drill may be typed as an HSS drill with all the advantages provided by an HSS drill. In an embodiment of the drill, the number of centre point cutting edges is two, three or four.

In an embodiment of the drill, the number of centre point cutting edges is two and the two centre point cutting edges form an S-shape with the apex as rotational symmetric point. This embodiment advantageously combines several features as specified in other embodiments for balancing the reduction of friction of the centre point due to the instability, oscillation or movement and the stability provided by the centre point as it is able to counter any random forces having an orientation substantially lying in the cutting plane by the centre point pushing sideways onto the walls of the centre hole.

### BRIEF DESCRIPTION OF THE DRAWINGS

The invention will be apparent from and elucidated further with reference to the embodiments described by way of example in the following description and with reference to the accompanying drawings, in which:
Figure 1 schematically shows a top view of a drill head;
Figure 2 schematically shows a side view of a drill head;
Figure 3 schematically shows a perspective side view of a drill; and
Figure 4 schematically shows a top view of a second drill head.

The figures are purely diagrammatic and not drawn to scale. In the figures, elements which correspond to elements already described may have the same reference numerals.

**LIST OF REFERENCE NUMERALS**

| | |
|---|---|
| 100 | drill |
| 110 | shank |
| 150 | drill head |
| 160, 160' | main cutting edge |
| 165, 165' | convex edge section |
| 166, 166' | distal end convex edge section |
| 167, 167' | proximal end convex edge section |
| 170, 170' | concave edge section |
| 171, 171' | distal end concave edge section |
| 172, 172' | proximal end concave edge section |
| 180 | centre point |
| 181, 181' | centre point cutting edge |
| 182 | apex |
| 183 | asymmetric cutting edge |
| 184 | ridge |
| 190, 190' | guiding land |
| 191, 191' | guiding land |
| 192, 192' | flute |
| r1 | first radius centre point cutting edge |
| r2 | second radius centre point cutting edge |
| C | drill head circumference |
| D | direction of rotation |
| R | rotational axis |
| Rad | radial |

### DETAILED DESCRIPTION OF EXEMPLARY EMBODIMENTS

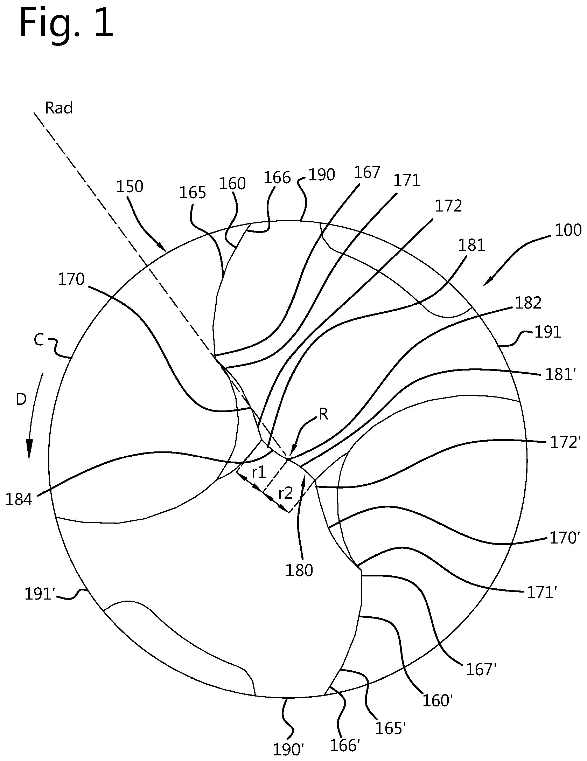

Figure 1 schematically shows a top view of a drill head 150 of a drill 100. The drill rotates around a rotational axis R. The drill rotates around this rotational axis in the direction D. The viewpoint of this figure is on the rotational axis, which causes the rotational axis, being a line, to be depicted as a dot in the centre of the drill. To introduce stability to the drill head and also the drill as a whole, the centre of rotation or rotational axis is aligned or at least substantially aligned with the centre line or elongated axis of the drill. The rotational axis further more may define a radial Rad. The radial Rad may be a line starting at the rotational axis and extending perpendicular from the rotational axis. The radial may be defined as radially extending from the rotational axis. Typically, the radial is the shortest way of reaching the circumference of the drill head starting from the rotational axis. The rotational axis further more may define a radial plane. The radial plane may be defined as a plane perpendicular to the rotational axis.

The drill head comprises main cutting edges 160, 160'. The main cutting edges have as a function to cut away the main part of the material from the object wherein a hole is to be drilled. The drill head has a circumference C, which is typically or substantially circular. The main cutting edges typically extend to the circumference of the drill head. The main cutting edges are typically substantially arranged in a radial plane thereby defining the cutting plane or main cutting plane which is a radial plane intersecting the rotational axis at a particular point. This particular point may be found by virtually extending the main cutting edges toward the rotational axis.

The drill head comprises a centre point 180. The centre point is typically protruding from the drill head. Thus, the centre point is protruding towards the viewpoint of Figure 1. The centre point functionally cuts a centre hole into the object or material wherein a hole is to be drilled. The centre point has as function that it should counter any forces having an orientation substantially in a radial plane. These forces are typically introduced by the main cutting edges when cutting, slicing and/or removing away the larger part of the material from the drill hole. These forces may be introduced by imperfections, granules, veins in the material to be removed. These forces are countered by the centre point pushing sideways onto the centre hole and thereby holding the drill head and thus the drill stable in a radial plane. The technical effect of this is that the centre point provides for a smooth entry of the main cutting edges into the material to be cut away by the main cutting edges. Further, the technical effect of this is that the centre point promotes a straighter drill hole having less deviations or sideway imperfections and may prevent a tortuous drill hole. It may be deduced from the previous that the centre point is typically protruding from the drill head to fulfil its function.

The centre point comprises an apex 182. The apex is the most protruding part or point of the centre point. The apex typically protrudes towards the viewpoint in Figure 1. The apex is aligned with the rotational axis. The apex is typically also substantially aligned with the centre line of the drill. This alignment of the apex typically enhances the stability of the drill head and thus the drill as a whole. Stability of the drill head may be defined as the amount of movement of and/or forces acting upon the drill relative to the object or material wherein a hole is to be drilled and/or while drilling.

The main cutting edges are typically arranged radially outward from the centre point. The main cutting edges are arranged adjoining to the centre point. The drill head comprises several main cutting edges, such as three, four or two as shown in Figure 1. The main cutting edges are typically radially distributed evenly for minimizing radial forces generated by the cutting main cutting edges.

Each of the main cutting edges 160, 160' may comprise a convex edge section 165, 165'. The convex edge section deviates and/or curves away from the radial in a radial plane with increasing radius. The convex edge section curve deviates and/or curves away in a direction opposite to the direction of rotation D or away from the material to be cut.

The drill head while rotating provides a tangential velocity to the main cutting edge. The tangential velocity increases linearly with increasing radius. Thus, the outside or radially most extending part of the main cutting edge will experience the highest tangential velocity. Also, the outside or radially most extending part of the main cutting edge will cut away the most material as it travellers the longest distance when going around. These two reasons may cause increased wear of the outside or radially more extending parts of the main cutting edges compared to parts of the main cutting edges arranged inside or radially less extending parts of the main cutting edges. Parts of the main cutting edges experiencing more wear will become quicker blunt compared to parts experiencing less wear. A blunt cutting edge will cause increased friction when drilling. Furthermore, the increased friction will further increase wear of that part of the blunt cutting edge further worsening the friction of that part of the main cutting edges.

The main cutting edges 160, 160' may comprise convex edge sections 165, 165'. The edge section having a convex shape arranges the edge section under a non-perpendicular angle with the tangential velocity. This advantageously allows the convex edge section to slice through the material to be removed instead of bluntly and frontally cutting into the material to be removed. The slicing motion of the convex edge section reduces the amount of wear on the convex edge section. A further effect of the convex edge section is that the edge section may be longer compared to extending along the radial while ending at the same radial distance from the rotational axis. The longer edge section means that more edge length is available to cut away material near the circumference of the drill head. Thus, the wear of the main cutting edge near the circumference of the drill head is spread out more, hence reducing the wear of the convex edge section. This effect may also be reached in an embodiment having a concave edge section arranged near the circumference of the drill head. Thus, the lifetime of the drill head may be extended by main cutting edges symmetrically radially extending from the centre point wherein each of the main cutting edges deviates and/or curves away from the radial.

The part of the main cutting edge close to the circumference of the drill head is preferably convex shaped. The material may comprise imperfections or other irregularities such as granules. The convex shape allows for forces experienced from these imperfections typically to advantageously translate into centripetal forces. Furthermore, the convex shape advantageously causes an outward or centrifugal force on the material just cut away. The centripetal and centrifugal forces or any other forces having a direction in a radial plane, such as the cutting plane, may be countered by the centre point snugly fitting in the centre hole. The centre point thus advantageously stabilizes or counters the instability caused by the main cutting edges curving away.

The drill may comprise guiding lands 190, 190', 191, 191'. A drill may be seen as a cylinder. The drill head is arranged to one end of the cylinder. The shank is arranged to the other end of the cylinder. The drill head is the part of the drill contacting the object or material first wherein a hole is drilled. The shank typically has a fitting for fitting into a drilling machine. Guiding lands are arranged along the surface of the cylinder and spiral from the drill head to the shank. Flutes are arranged between the guiding lands for transporting cut material away from the drill head towards the shank and thus out of the drill hole. The upper edge of the wall on each side of the flutes may be formed by edges from the guiding lands. Guiding lands may stabilize the drill when the drill is far enough inside the drill hole for the guiding lands to be able to push onto the sides of the drill hole.

The convex edge sections 165, 165' may comprise distal ends 166, 166'. The convex edge section of a main cutting edge typically ends at the circumference of the drill. Preferably, the convex edge section ends at a guiding land. More preferably, the convex edge section ends at an edge of the guiding land 190, 190'. As the edge of the guiding land is typically also the upper wall of the flute, the material just cut away is advantageously directly inserted in the channel created by the flute and the side of the drilled hole for transport away from the drill head.

This improves transportation of material just cut away. The material cut away is thus less likely to come an additional time into contact with the main cutting edge reducing the wear of the main cutting edge. Furthermore, the pressure of the material just cut away is lessened further reducing the change of material cut away to come an additional time into contact with the main cutting edge. Thus, this has the technical effect of reducing wear, hence, improving lifetime of the main cutting edge, drill head and drill.

The main cutting edges may comprise concave edge sections 170, 170'. Typically, if also a convex edge section is present, the concave edge section is arranged radially closer to the axis of rotation and/or apex compare to the convex edge section. In other words, the concave edge section is arranged proximal relative to the convex edge section.

The convex edge section may have a proximal end 167, 167' which is proximal relative to the rotational axis R. The concave edge section may have a distal end 171, 171' which is distal relative to the rotational axis R. The proximal end of the convex edge section may be adjacent or adjoining to the distal end of the concave edge section for forming a continuous main cutting edge.

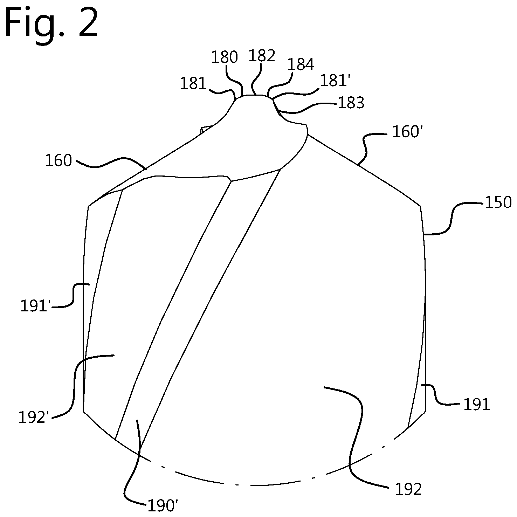

The centre point 180 comprises centre point cutting edges 181, 181'. The centre point cutting edges typically extend from the apex 182. The centre point cutting edges typically start out to extend relatively inside a radial plane, which may be typed as a centre point cutting plane, from the apex. Thereafter the centre point cutting edges at a particular radius recede to form a sharp ridge 184 with the apex in the middle of the ridge, as shown in Figure 2. This typically sharp receding at the ends of the ridge cause a centre hole while drilling, which centre hole has a relatively steep sidewall. This steep side wall allows the centre point arranged in the centre hole to counter any forces in a radial plane caused by the drilling and causing instability of the drill head by the centre point being pushed against the sidewall of the centre hole. Due to the steep side wall of the centre hole, these forces may even make a slight angle with the radial plane.

The apex is typically aligned with the rotational axis of the drill. From the apex the first centre point cutting edge 181 being part of the ridge 184 extends a first radius r1. Also, from the apex the second centre point cutting edge 181' being part of the ridge 184 extends a second radius r2. The first and the second radius are different in Figure 1. This difference in radius from the apex and/or the rotational axis causes a slight instability during drilling, which instability reduces the friction encountered by the centre point.

The concave edge section may comprise a proximal end 172, 172'. The proximal end of the concave edge section typically ends at the centre point 180. The centre point comprises centre point cutting edges 181, 181'. The centre point cutting edges may be adjacent or adjoining to the proximal end of the concave edge section for forming a continuous cutting edge with the main cutting edge. Thus, a centre point cutting edge and a main cutting advantageously form a continuous cutting edge for allowing material to be cut away starting from the apex up to the circumference of the drill.

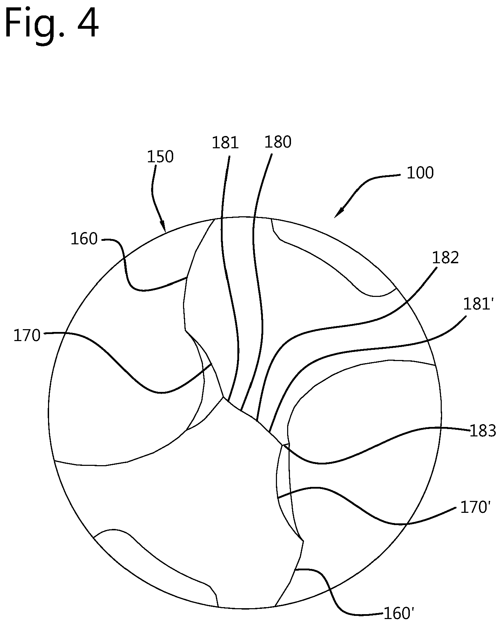

Due to the different radius of the centre point cutting edges in the embodiment of Figure 1, one of the centre point cutting edges is extended by an asymmetric cutting edge 183, as shown in Figures 2 and 4. The asymmetric cutting edge links the centre point cutting edge to the proximal end of a main cutting edge for advantageously forming a continuous cutting edge.

Figure 2 schematically shows a side view of a drill head 150. The drill head comprises main cutting edges 160, 160' and a centre point 180. The main cutting edges extend from the centre point and slightly recede with an increasing radius. The receding may be under an angle in the range of up to pi/4 radian, preferably less than pi//5 radian, more preferably less than pi/6 radian. The receding main cutting edge may still be considered to be substantially arranged in a radial plane, such as a main cutting plane.

The drill head may comprise guiding lands 190, 191, 191' for providing a means for the drill to push against the side wall of the drill hole for creating stability. Furthermore, between the guiding lands the flutes 192, 192' are formed for transporting removed material from the drill head towards the shank of the drill.

The slight receding of the main cutting edges has the technical effect of improving the transport of just cut material towards the circumference for enhancing the transportation of just cut material away from the centre point and/or centre of the drill head and towards the outside of the drill head and/or the flutes. The enhanced transportation reduces the friction of the drill head while drilling.

The centre point 180 comprises centre point cutting edges 181, 181'. The middle of the centre point is formed by the apex 182. The centre point cutting edges extend from the apex and/or rotational axis for a specific radius relatively level and thereafter start to recede sharply thereby forming a ridge 184. As the ridge may extend radially different in different directions, and the preference to form a continuous edge with the main cutting edges, the centre point cutting edge 181' providing the part of the ridge extending radially less is extended by an asymmetric cutting edge 183 for filling the gap towards the end of the main cutting edge for advantageously forming the continuous cutting edge.

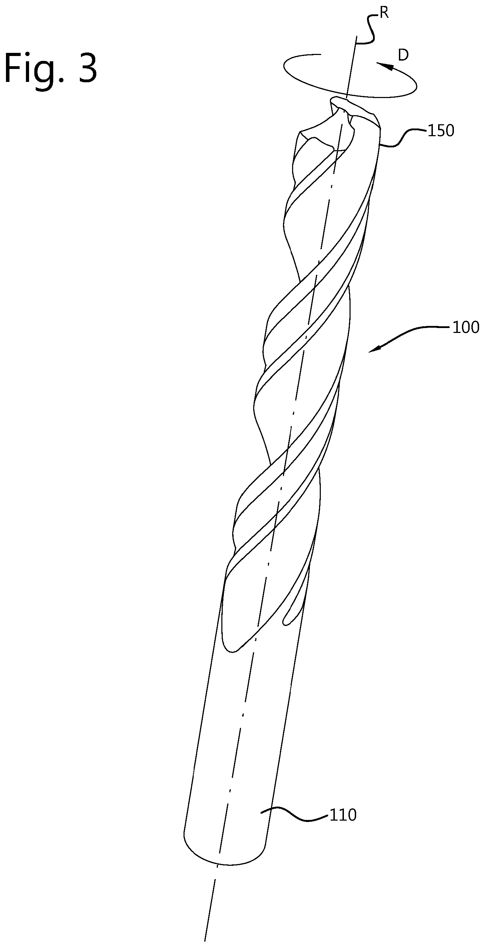

Figure 3 schematically shows a perspective side view of a drill 100. The drill comprises a drill head 150 and may comprise a shank 110. The drill head and the shank are arranged on opposite ends of the drill. The shank may be shaped to be gripped by gripping means of a drilling machine. The shank is typically shaped such that the drill may be easily replaced in the drilling machine. The drill typically rotates around a rotational axis R. The drill may rotate around the rotational axis in a rotational direction D.

Figure 4 schematically shows a top view of a second drill head 150. Figure 4 shows the same features as in Figure 1. This figure further shows a larger difference in the ending of the centre point cutting edge, hence the asymmetric cutting edge 183 is more clearly present in Figure 4.

According to the invention, the diameter of the drill may be in the range of 2 mm to 100 mm, preferably 4 mm to 80 mm, more preferably 6 mm to 60 mm, even more preferably 8 mm to 40 mm, most preferably, 10 mm to 20 mm.

According to the invention, the diameter of the centre point may be a fraction of the diameter of the drill, the fraction may be in the range of 0.5 to 0.01, preferably 0.4 to 0.04, more preferably 0.3 to 0.06, even more preferably 0.2 to 0.08, most preferably around 0.1.

According to the invention, the centre point cutting edges are asymmetric. The asymmetry may be by a different rate of receding especially at some radial distance from the apex and/or rotational axis. The difference in rate of receding may be expressed as a ridge extending from the apex and/or rotational axis with different radius. The asymmetry in the ridge may be expressed as a different radius from the apex and/or rotational axis for the ridge. The difference in radius may be in the range of 2 mm to 0.005 mm, preferably 1 mm to 0.01 mm, more preferably 1 mm to 0.05 mm. The asymmetry may also be by extending to a different radius from the apex and/or rotational axis. The difference in radius may be in the range of 2 mm to 0.005 mm, preferably 1 mm to 0.01 mm, more preferably 1 mm to 0.05 mm. The gap in the asymmetry may be filled up or bridged by an asymmetric cutting edge.

According to the invention, the asymmetry from the centre point causes a movement or an oscillation or movement during drilling. The amplitude of the oscillation, motion or movement is typically a fraction of the diameter of the centre point. The fraction may be in the range of 0.5 to 0.01, preferably 0.4 to 0.02, more preferably 0.3 to 0.03, even more preferably 0.2 to 0.04, most preferably around 0.05.

Examples of hard materials are metals, preferably certain metals, such as iron and copper, and alloys containing metals, such as steel, bronze and brass.

According to the invention, the centre point protrudes from the drill head. The length of the protrusion of the centre point, more specifically the apex, may be expressed as a ratio relative to the diameter of the centre point. The ratio may be in the range of 0.7 to 0.05, preferably 0.6 to 0.1, more preferably 0.5 to 0.15, even more preferably 0.4 to 0.2, most preferably around 0.3.

In the foregoing specification, the invention has been described with reference to specific examples of embodiments of the invention. It will, however, be evident that various modifications and changes may be made therein without departing from the scope of the invention as set forth in the appended claims. The specifications and drawings are, accordingly, to be regarded in an illustrative rather than in a restrictive sense.

In the claims, any reference signs placed between parentheses shall not be construed as limiting the claim. The word 'comprising' or 'including' does not exclude the presence of other elements or steps than those listed in a claim. Furthermore, the terms "a" or "an," as used herein, are defined as one or as more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. Drill (100) for drilling in hard materials, comprising a drill head (150) having a rotational axis (R), wherein the drill head comprises a centre point (180), main cutting edges (160, 160') radially extending from the centre point (180) further comprising:
- an apex (182) aligned with the rotational axis;
- centre point cutting edges (181, 181') radially extending and receding from the apex,
- wherein a first one of the centre point cutting edges and a second one of the centre point cutting edges have a different radius (r1, r2) and/or are receding at least for a part at a different rate;
**characterised in that**
the centre point comprises an asymmetric cutting edge (183) arranged between a proximal end (172') of one of the main cutting edges (160, 160') and a distal end of one of the centre point cutting edges (181'); and
**in that** a proximal end (172) of another one of the main cutting edges (160, 160') ends at a distal end of another one of the centre point cutting edges (181).

2. Drill according to the preceding claim, wherein the centre point cutting edges (181; 181') are angularly evenly distributed around the apex (182).

3. Drill according to any of the preceding claims, wherein the centre point cutting edges (181; 181') deviate and/or curve away from a radial.

4. Drill according to the preceding claim, wherein the centre point cutting edges (181; 181') are convex centre point cutting edges.

5. Drill according to any of the preceding claims, wherein the centre point cutting edges (181; 181') recede from the apex at the same rate.

6. Drill according to any of the preceding claims, wherein the part of the first one of the centre point cutting edges (181; 181') and the part of the second one of the centre point cutting edges (181; 181') having a different rate of receding are arranged distal from the apex (182).

7. Drill according to the preceding claim, wherein a proximal end (172, 172') of each of the main cutting edges (160, 160') ends at a distal end of the centre point cutting edges (181; 181').

8. Drill according to the preceding claim, wherein the asymmetric cutting edge extends in a direction different from the direction of the distal end of the one of the centre point cutting edges (181; 181').

9. Drill according to any of the preceding claims, wherein the number of centre point cutting edges (181; 181') is two and the two centre point cutting edges (181; 181') form an S-shape with the apex (150) as rotational symmetric point.

10. Drill (100) according to one of the preceding claims, wherein each of the main cutting edges (160, 160') deviates from a radial (Rad).

11. Drill (100) according to claim 10, wherein the deviation of one of the main cutting edges (160, 160') is defined as that there exists a tangent line tangent to a point of the main cutting edge (160, 160'), wherein the tangent line has a non-zero angle with the radial through that point.

12. Drill (100) according to any of the preceding claims, wherein each of the main cutting edges (160, 160') comprise at least one section that deviates and/or curves away from the radial.

13. Drill (100) according to any of the preceding claims, wherein each of the main cutting edges (160, 160') comprises a convex edge section (165, 165').

14. Drill (100) according to the preceding claim, wherein the drill head has a drill head (150) circumference (C) and wherein a distal end (166, 166') of each of the convex edge sections ends at the drill head circumference.

15. Drill (100) according to any of the preceding claims, wherein the drill (100) has a drill circumference (C), and comprises at least two guiding lands (190, 190', 191, 191') arranged to the drill circumference and spiralling away from the drill head.

## Patentansprüche

1. Bohrer (100) zum Bohren in harten Werkstoffen, umfassend einen Bohrkopf (150) mit einer Drehachse (R), wobei der Bohrkopf einen Mittelpunkt (180), radial von dem Mittelpunkt (180) erstreckende Hauptschneidkanten (160, 160') ferner umfassend:
- ein Scheitelpunkt (182), der mit der Rotationsachse ausgerichtet ist;
- Mittelpunktschneidkanten (181, 181'), die sich radial vom Scheitelpunkt aus erstrecken und zurückweichen,
- wobei eine erste und eine zweite Mittelpunktschneidkanten einen unterschiedlichen Radius (r1, r2) aufweisen und/oder sich zumindest teilweise mit unterschiedlicher Rate zurückgehen,
**dadurch gekennzeichnet, dass**
der Mittelpunkt eine asymmetrische Schneidkante (183) umfasst, die zwischen einem proximalen Ende (172') einer der Hauptschneidekanten (160, 160') und einem distalen Ende einer der Mittelpunktschneidkanten (181') angeordnet ist; und
dass wobei ein proximales Ende (172) einer anderen Hauptschneidekante (160, 160') an einem distalen Ende einer anderen Mittelpunktschneidkante (181) endet.

2. Bohrer nach der vorhergehenden Anspruch, wobei die Mittelpunktschneidkanten (181; 181') gleichmäßig um den Scheitelpunkt (182) herum winklig verteilt sind.

3. Bohrer nach einem der vorhergehenden Ausführungsbeispiele, wobei die Mittelpunktschneidkanten (181, 181') von einer radialen Richtung abweichen und/oder sich von dieser krümmen.

4. Bohre gemäß dem vorhergehenden Anspruch, wobei die Mittelpunktschneidkanten (181, 181') konvexe e konvexe Mittelpunktschneidkanten sind.

5. Bohrer gemäß einer der vorhergehenden Ansprüche, wobei Mittelpunktschneidkanten mit der gleichen Rate vom Scheitelpunkt zurückweichen.

6. Bohrer nach einem der vorhergehenden Ansprüche, wobei der Teil der ersten Mittelpunktschneidekanten (181, 181') und der Teil der zweiten der Mittelpunktschneidekanten (181, 181') unterschiedliche Raten des Zurückgehens distal von dem Scheitelpunkt (182) haben.

7. Bohrer nach dem vorhergehenden Anspruch, wobei ein proximales Ende (172, 172') jeder der Hauptschneidekanten an einem distalen Ende der Mittelpunktschneidekanten (180, 181') endet.

8. Bohrer nach dem vorhergehenden Anspruch, wobei sich die asymmetrische Schneidkante in eine andere Richtung erstreckt als die Richtung des distalen Endes der einen der Mittelpunktschneidkanten (181, 181').

9. Bohrer nach einem der vorhergehenden Ansprüche, wobei die Anzahl der Mittelpunktschneidekanten (181, 181') zwei beträgt und die beiden Mittelpunktschneidekanten (181, 181') eine S-Form mit dem Scheitelpunkt (150) als rotationssymmetrischem Punkt bilden.

10. Bohrer (100) nach einem der vorhergehenden Ansprüche, wobei jede der Hauptschneidekanten (160, 160') von einem Radial (Rad) abweicht.

11. Bohrer (100) nach Anspruch 10, wobei die Abweichung einer der Hauptschneidekanten (160, 161') so definiert ist, dass eine Tangente tangential zu einem Punkt der Hauptschneidekante (160, 160') existiert, wobei die Tangente einen Winkel ungleich Null mit der Radialen durch diesen Punkt aufweist.

12. Bohrer (100) nach einem der vorhergehenden Ansprüche, wobei jede der Hauptschneidekanten (160, 161') mindestens einen Abschnitt aufweist, der von der Radialen abweicht und/oder sich krümmt.

13. Bohrer (100) nach einem der vorhergehenden Ansprüche, wobei jede der Hauptschneidekanten (160, 160') einen konvexen Kantenabschnitt (165, 165') aufweist.

14. Bohrer (100) nach der vorhergehenden Ansprüche, wobei der Bohrkopf einen Bohrkopfumfang (C) aufweist und wobei ein distales Ende (166, 166') jedes der konvexen Kantenabschnitte am Bohrkopfumfang endet.

15. Bohrer (100) nach einem der vorhergehenden Ausführungsbeispiele, wobei der Bohrer (100) einen Bohrumfang (C) hat und mindestens zwei Leitflächen (190, 190', 191, 19') umfasst, die am Bohrumfang angeordnet sind und spiralförmig vom Bohrkopf wegführen.

## Revendications

1. Foret (100) destiné au perçage de matériaux durs, comprenant une tête de foret (150) ayant un axe de rotation (R), la tête de foret comprenant une pointe centrale (180), des arêtes de coupe principales (160, 160') s'étendant radialement à partir de la pointe centrale (180), et comprenant en outre :
- un sommet (182) aligné avec l'axe de rotation ;
- des arêtes de coupe de pointe centrale (181, 181') s'étendant radialement à partir du sommet et s'en éloignant ;
- dans lequel une première des arêtes de coupe de pointe centrale et une deuxième des arêtes de coupe de pointe centrale ont un rayon
différent (r1, r2) et/ou s'éloignent au moins sur une partie de leur longueur selon des taux différents ;
**caractérisé en ce que** la pointe centrale comprend une arête de coupe asymétrique (183) agencée entre une extrémité proximale (172') de l'une des arêtes de coupe principales (160, 160') et une extrémité distale de l'une des arêtes de coupe de pointe centrale (181') ; et
**en ce qu'**une extrémité proximale (172) d'une autre des arêtes de coupe principales (160, 160') se termine au niveau d'une extrémité distale d'une autre des arêtes de coupe de pointe centrale (181).

2. Foret selon la revendication précédente, dans lequel les arêtes de coupe de pointe centrale (181 ; 181') sont réparties uniformément en angle autour du sommet (182).

3. Foret selon l'une quelconque des revendications précédentes, dans lequel les arêtes de coupe de pointe centrale (181 ; 181') s'écartent d'une direction radiale et/ou s'incurvent en s'en éloignant.

4. Foret selon la revendication précédente, dans lequel les arêtes de coupe de pointe centrale (181 ; 181') sont des arêtes de coupe de pointe centrale convexes.

5. Foret selon l'une quelconque des revendications précédentes, dans lequel les arêtes de coupe de pointe centrale (181 ; 181') s'éloignent du sommet selon le même taux.

6. Foret selon l'une quelconque des revendications précédentes, dans lequel la partie de la première des arêtes de coupe de pointe centrale (181 ; 181') et la partie de la deuxième des arêtes de coupe de pointe centrale (181 ; 181') ayant un taux d'éloignement différent sont agencées de manière distance par rapport au sommet (182).

7. Foret selon la revendication précédente, dans lequel une extrémité proximale (172, 172') de chacune des arêtes de coupe principales (160, 160') se termine au niveau d'une extrémité distale des arêtes de coupe de pointe centrale (181 ; 181').

8. Foret selon la revendication précédente, dans lequel l'arête de coupe asymétrique s'étend dans une direction différente de celle de l'extrémité distale de ladite une des arêtes de coupe de pointe centrale (181 ; 181').

9. Foret selon l'une quelconque des revendications précédentes, dans lequel le nombre d'arêtes de coupe de pointe centrale (181 ; 181') est de deux et dans lequel les deux arêtes de coupe de pointe centrale (181 ; 181') forment une forme en S, le sommet (150) étant un point de symétrie de rotation.

10. Foret (100) selon l'une quelconque des revendications précédentes, dans lequel chacune des arêtes de coupe principales (160, 160') s'écarte d'une direction radiale (Rad).

11. Foret (100) selon la revendication 10, dans lequel l'écart de l'une des arêtes de coupe principales (160, 160') est défini par l'existence d'une ligne tangente à un point de l'arête de coupe principale (160, 160'), la ligne tangente formant un angle non nul avec la direction radiale passant par ce point.

12. Foret (100) selon l'une quelconque des revendications précédentes, dans lequel chacune des arêtes de coupe principales (160, 160') comprend au moins une section qui s'écarte d'une direction radiale et/ou s'incurve en s'en éloignant.

13. Foret (100) selon l'une quelconque des revendications précédentes, dans lequel chacune des arêtes de coupe principales (160, 160') comprend une section d'arête convexe (165, 165').

14. Foret (100) selon la revendication précédente, dans lequel la tête de foret a une circonférence (C) de tête de foret (150) et dans lequel une extrémité distale (166, 166') de chacune des sections d'arête convexes se termine au niveau de la circonférence de tête de foret.

15. Foret (100) selon l'une quelconque des revendications précédentes, dans lequel le foret (100) a une circonférence (C) et comprend au moins deux méplats de guidage (190, 190', 191, 191') agencés sur la circonférence de foret et s'étendant en spirale en s'éloignant de la tête de foret.
